# EUROPEAN PATENT APPLICATION

(11) **EP 4 169 605 A1**
(43) Date of publication of application: **26.04.2023**
(21) Application number: 22200702.3
(22) Date of filing: 11.10.2022
(51) Int. Cl.: B01D 61/12, B01D 61/58, B01D 65/02, B01D 61/04, C02F 1/00, C02F 1/24, C02F 1/44, B01D 61/02, B01D 61/14, C02F 103/08

(54) **APPARATUS AND METHOD FOR CONTROLLING REVERSE OSMOSIS MEMBRANE SEAWATER DESALINATION PLANT**

(30) Priority: 21.10.2021 KR 20210140744
(71) Applicant: Doosan Enerbility Co., Ltd., Seongsan-gu Changwon-si, Gyeongsangnam-do 51711 (KR)
(72) Inventor: LEE, Young Geun, 16988 Yongin-si, Gyeonggi-do (KR); KWAK, Jae Hwa, 08725 Seoul (KR); KIM, Yeong Hyeok, 06745 Seoul (KR); NA, Sang Gun, 06626 Seoul (KR); PARK, Jung Won, 38081 Gyeongju-si, Gyeongsangbuk-do (KR)
(74) Representative: BCKIP Part mbB

(57) **Abstract**

Provided is an apparatus for controlling a seawater desalination plant. The apparatus includes: a dissolved air flotation device configured to provide treated water obtained by treating seawater according to a dissolved air flotation (DAF); an ultrafiltration device including a plurality of ultrafiltration units each having an ultrafiltration membrane, and configured to perform an ultrafiltration (UF) process of filtering impurities remaining in the treated water using the ultrafiltration membranes of the plurality of ultrafiltration units; a reverse osmosis device; an information collection unit; and a state treatment unit.

## Description

### BACKGROUND

### Technical Field

The present disclosure relates to a plant control technique, and more specifically, to an apparatus and method for controlling a reverse osmosis membrane seawater desalination plant.

### Background of Invention

A pretreatment of seawater desalination plants uses chemicals such as pH modulator and a coagulant in a former process of a dissolved air flotation (DAF) in order to remove suspended solids such as solid materials. In such pretreatment, a conventional method has relied on sampling experiments and an operator's know-how in order to inject appropriate chemicals, and it is difficult to perform a control to reflect a change in a real-time state of seawater and a latter process state of the DAF consisting of a main process.

### SUMMARY

An object of the present disclosure is to provide an apparatus and method for controlling a reverse osmosis membrane seawater desalination plant.

In order to achieve the object, an aspect of the present disclosure provides an apparatus for controlling a reverse osmosis membrane seawater desalination plant including: a dissolved air flotation device configured to receive seawater and to provide treated water obtained by treating the seawater according to a dissolved air flotation (DAF); an ultrafiltration device including one or more of ultrafiltration units, each ultrafiltration unit having an ultrafiltration membrane, and configured to perform an ultrafiltration (UF) process of filtering impurities remaining in the treated water using the ultrafiltration membranes of the one or more of ultrafiltration units; a reverse osmosis device including one or more of trains, each train having a reverse osmosis membrane, and configured to perform a reverse osmosis (RO) process of filtering the impurities remaining in the treated water using reverse osmosis membranes of the plurality of trains; an information collection unit configured to collect a turbidity (Turb) of the treated water, a residual iron (RI) of the treated water, an ultrafiltration differential pressure increase rate representing an increase rate of a differential pressure (DP) according to the ultrafiltration process, and a reverse osmosis differential pressure increase rate representing an increase rate of the differential pressure according to the reverse osmosis process; and a state treatment unit configured to adjust an injection amount of chemical agent that is injected into the seawater so as to maintain a state in which the ultrafiltration differential pressure increase rate and the reverse osmosis differential pressure increase rate are less than a preset UF reference value and a preset RO reference value, respectively, while maintaining a state in which the turbidity and the residual iron are less than a preset Turb reference value and a preset RI reference value.

The state treatment unit may be further configured to determine whether the turbidity of the treated water is greater than or equal to the preset Turb reference value, and adjust the injection amount of chemical agent so that the turbidity of the treated water become less than the preset Turb reference value when the turbidity of the treated water is determined to be greater than or equal to the preset Turb reference value.

The state treatment unit may be further configured to determine whether the ultrafiltration differential pressure increase rate and the reverse osmosis differential pressure increase rate are greater than or equal to the preset UF reference value and a preset RO reference value, respectively, when the turbidity of the treated water is determined to be less than the preset Turb reference value, determine whether the residual iron of the treated water is greater than or equal to the preset RI reference value when the ultrafiltration differential pressure increase rate and the reverse osmosis differential pressure increase rate are determined to be greater than or equal to the preset UF reference value and a preset RO reference value, respectively, and change the injection amount of chemical agent so that the residual iron of the treated water becomes less than the preset RI reference value when the residual iron of the treated water is determined to be greater than or equal to the preset RI reference value.

The state treatment unit may be further configured to determine whether the ultrafiltration differential pressure increase rate or the reverse osmosis differential pressure increase rate is greater than or equal to the preset UF reference value or a preset RO reference value, respectively, when the residual iron of the treated water is determined to be less than the preset RI reference value, and change the injection amount of chemical agent so that the ultrafiltration differential pressure increase rate and the reverse osmosis differential pressure increase rate become less than the preset UF reference value and a preset RO reference value, respectively, when the ultrafiltration differential pressure increase rate or the reverse osmosis differential pressure increase rate is determined to be greater than or equal to the preset UF reference value or a preset RO reference value, respectively.

When the ultrafiltration differential pressure increase rate and the reverse osmosis differential pressure increase rate are determined to be less than the preset UF reference value and a preset RO reference value, respectively, the state treatment unit may be further configured to adjust the injection amount of chemical agent to gradually converge to a basic injection amount after waiting for a predetermined period.

The chemical agent may include at least one of a hydrogen ion concentration modulator and a coagulant.

The information collection unit may be configured to collect a differential pressure value from the ultrafiltration unit during a ultrafiltration differential pressure increase rate calculation period that is from a predetermined time after a filtration mode in which the ultrafiltration unit performs filtering is started and until a predetermined time before any one of a backwash mode or a chemical enhanced backwash mode in which the ultrafiltration unit performs washing is started, and calculate a slope of a linear trend line of the collected differential pressure values as the ultrafiltration differential pressure increase rate of the ultrafiltration unit.

The state treatment unit may be further configured to determine that the ultrafiltration differential pressure increase rate is greater than or equal to the preset UF reference value when the number of ultrafiltration units in which the ultrafiltration differential pressure increase rate is greater than or equal to a predetermined set value is greater than or equal to a predetermined number of UF units.

The information collection unit is configured to collect a differential pressure value from the train during a preset reverse osmosis differential pressure increase rate calculation period, and divide the period in which the preset reverse osmosis differential pressure increase rate is calculated into unit times, and calculates a slope of a linear trend line of the collected differential pressure values for each divided unit time as the reverse osmosis differential pressure increase rate.

The state treatment unit may be further configured to determine that the reverse osmosis differential pressure increase rate is greater than or equal to the preset RO reference value when the number of trains in which the reverse osmosis differential pressure increase rate is greater than or equal to a predetermined set value is greater than or equal to a predetermined number of RO trains.

In order to achieve the object, an apparatus for controlling a reverse osmosis membrane seawater desalination plant according to a preferred embodiment of the present disclosure includes: a chemical agent treatment unit configured to inject a chemical agent to seawater; an information collection unit configured to collect a turbidity (Turb) of treated water and a residual iron (RI) obtained by treating the seawater according to dissolved air flotation (DAF), an ultrafiltration differential pressure increase rate representing an increase rate of a differential pressure (DP) according to the ultrafiltration (UF) process of filtering impurities remaining in the treated water, and a reverse osmosis differential pressure increase rate representing an increase rate of the differential pressure according to the reverse osmosis (RO) process of filtering the impurities remaining in the treated water; and a state treatment unit configured to compare the turbidity of the treated water, the residual iron of the treated water, the ultrafiltration differential pressure increase rate, and the reverse osmosis differential pressure increase rate with a preset Turb reference value, a preset RI reference value, a preset UF reference value and a preset RO reference value, and adjust the injection amount of chemical agent by controlling the chemical agent treatment unit so as to maintain a state in which the ultrafiltration differential pressure increase rate and the reverse osmosis differential pressure increase rate become less than the preset UF reference value and the preset RO reference value, respectively, while maintaining a state in which the turbidity and the residual iron are less than the preset Turb reference value and the RI reference value, respectively.

The state treatment unit may be further configured to determine whether the turbidity of the treated water is greater than or equal to the Turb preset reference value, and adjust the injection amount of chemical agent so that the turbidity of the treated water becomes less than the preset Turb reference value when the turbidity of the treated water is determined to be greater than or equal to the preset Turb reference value.

The state treatment unit may be further configured to determine whether the ultrafiltration differential pressure increase rate and the reverse osmosis differential pressure increase rate are greater than or equal to the preset UF reference value and the preset RO reference value, respectively, when the turbidity of the treated water is determined to be less than the preset reference value, determine whether the residual iron of the treated water is greater than or equal to the preset RI reference value when the ultrafiltration differential pressure increase rate and the reverse osmosis differential pressure increase rate are greater than or equal to the preset UF reference value and a preset RO reference value, respectively., and change the injection amount of chemical agent so that the residual iron of the treated water becomes less than the preset RI reference value when the residual iron of the treated water is determined to be greater than or equal to the preset RI reference value.

The state treatment unit may be further configured to determine whether the ultrafiltration differential pressure increase rate or the reverse osmosis differential pressure increase rate is greater than or equal to the preset UF reference value or the preset RO reference value, respectively, when the residual iron of the treated water is less than the preset RI reference value, and change the injection amount of chemical agent so that the ultrafiltration differential pressure increase rate and the reverse osmosis differential pressure increase rate become less than the preset UF reference value and the preset RO reference value, respectively, when the ultrafiltration differential pressure increase rate or the reverse osmosis differential pressure increase rate is greater than or equal to the preset UF reference value or the preset RO reference value, respectively.

When the ultrafiltration differential pressure increase rate and the reverse osmosis differential pressure increase rate are less than the preset UF reference value and a preset RO reference value, respectively, the state treatment unit may be further configured to adjust the injection amount of chemical agent to gradually converge to a basic injection amount after waiting for a predetermined period.

In order to achieve the object, yet another embodiment of the present disclosure is a method of controlling a reverse osmosis membrane seawater desalination plant includes: collecting, by an information collection unit, a turbidity (Turb) and a residual (RI) of treated water obtained by treating seawater according to a dissolved air flotation (DAF), an ultrafiltration differential pressure increase rate representing an increase rate of a differential pressure (DP) according to the ultrafiltration (UF) process of filtering impurities remaining in the treated water, and a reverse osmosis differential pressure increase rate representing an increase rate of the differential pressure according to the reverse osmosis process of filtering the impurities remaining in the treated water; and comparing, by a state treatment unit, the turbidity of the treated water, the residual iron of the treated water, the ultrafiltration differential pressure increase rate, and the reverse osmosis differential pressure increase rate with a preset Turb reference value, a preset RI reference value, a preset UF reference value and a preset RO reference value, and adjusting the injection amount of chemical agent to the seawater so as to maintain a state in which the ultrafiltration differential pressure increase rate and the reverse osmosis differential pressure increase rate become less than the preset UF reference value and the preset RO reference value while maintaining a state in which the turbidity and the residual iron are less than the preset Turb reference value and the preset RI reference value.

The adjusting of the injection amount of chemical agent may include determining, by the state treatment unit, whether the turbidity of the treated water is greater than or equal to the preset Turb reference value, and adjusting, by the state treatment unit, the injection amount of chemical agent so that the turbidity of the treated water becomes less than the preset Turb reference value when the turbidity of the treated water is determined to be greater than or equal to the preset Turb reference value.

The method further may further comprise, after the determining of whether the turbidity of the treated water is greater than or equal to the preset Turb reference value, determining, by the state treatment unit, whether the ultrafiltration differential pressure increase rate and the reverse osmosis differential pressure increase rate are greater than or equal to the preset UF reference value and the preset RO reference value, respectively, when the turbidity of the treated water is determined to be less than the preset Turb reference value, determining, by the state treatment unit, whether the residual iron of the treated water is greater than or equal to the preset RI reference value when the ultrafiltration differential pressure increase rate and the reverse osmosis differential pressure increase rate are determined to be greater than or equal to the preset UF reference value and the preset RO reference value, and changing, by the state treatment unit, the injection amount of chemical agent so that the residual iron of the treated water becomes less than the preset RI reference value when the residual iron of the treated water is determined to be greater than or equal to the preset RI reference value.

The method may further includes, after the determining of whether the residual iron of the treated water is greater than or equal to the preset RI reference value, determining, by the state treatment unit, whether the ultrafiltration differential pressure increase rate or the reverse osmosis differential pressure increase rate is greater than or equal to the preset UF reference value or the preset RO reference value, respectively, when the residual iron of the treated water is determined to be less than the preset RI reference value, and changing, by the state treatment unit, the injection amount of chemical agent so that the ultrafiltration differential pressure increase rate and the reverse osmosis differential pressure increase rate become less than the preset UF reference value and the preset RO reference value, respectively, when the ultrafiltration differential pressure increase rate or the reverse osmosis differential pressure increase rate is determined to be greater than or equal to the preset UF reference value and the preset RO reference value, respectively.

The method may further includes, after the determining of whether the ultrafiltration differential pressure increase rate or the reverse osmosis differential pressure increase rate is greater than or equal to the preset UF reference value or the preset RO reference value, respectively, when the ultrafiltration differential pressure increase rate and the reverse osmosis differential pressure increase rate are determined to be less than the preset UF reference value and the preset RO reference value, respectively, waiting, by the state treatment unit, for a predetermined period, and adjusting, by the state treatment unit, the injection amount of chemical agent to gradually converge to a basic injection amount.

The chemical agent may include at least one of a hydrogen ion concentration modulator and a coagulant.

According to the present disclosure, it is possible to reflect the change in the introduced water quality in the seawater desalination plant and the state of the plant to optimize the injection amount of chemical agent by adjusting the injection amount of chemical agent into the seawater so as to maintain the state in which the ultrafiltration differential pressure increase rate and the reverse osmosis differential pressure increase rate are less than the preset UF reference value and the preset RO reference value, respectively while maintaining the state in which the turbidity and residual iron of the treated water are less than the preset Turb reference value and the preset RI reference value. Accordingly, it is possible to help the stable operation and management of the latter process, and reduce the cost in terms of operation.

### BRIEF DESCRIPTION OF THE DRAWINGS

The above and other aspects of the present disclosure will become more apparent from the following description of the exemplary embodiments with reference to the accompanying drawings, in which:
FIG. 1 is a view for describing a configuration of an apparatus for controlling a reverse osmosis membrane seawater desalination plant according to an embodiment of the present disclosure;
FIG. 2 is a flowchart for describing a method of controlling the reverse osmosis membrane seawater desalination plant according to an embodiment of the present disclosure; and
FIG. 3 is a view showing a computing apparatus according to an embodiment of the present disclosure.

### DETAILED DESCRIPTION

Since the present disclosure may have various changes and have various embodiments, specific embodiments are shown and described in detail in the detailed description. However, this is not intended to limit the present disclosure to specific embodiments, and should be understood to include all modifications, equivalents, and substitutes included in the spirit and scope of the present disclosure.

The terms used in the present disclosure are only used to describe specific embodiments, and are not intended to limit the present disclosure. The singular expression includes the plural expression unless the context clearly dictates otherwise. In the present disclosure, it should be understood that terms such as 'comprise' or 'have' are intended to designate that the features, numbers, steps, operations, components, parts, or combinations thereof described in the specification exist, and do not preclude the presence or addition possibility of one or more other features, numbers, steps, operations, components, parts, or combinations thereof in advance.

Hereinafter, preferred embodiments of the present disclosure will be described in detail with reference to the accompanying drawings. At this time, it should be noted that the same components are denoted by the same reference numerals as much as possible in the accompanying drawings. In addition, detailed descriptions of known functions and configurations that may obscure the gist of the present disclosure will be omitted. For the same reason, some components are exaggerated, omitted, or schematically shown in the accompanying drawings.

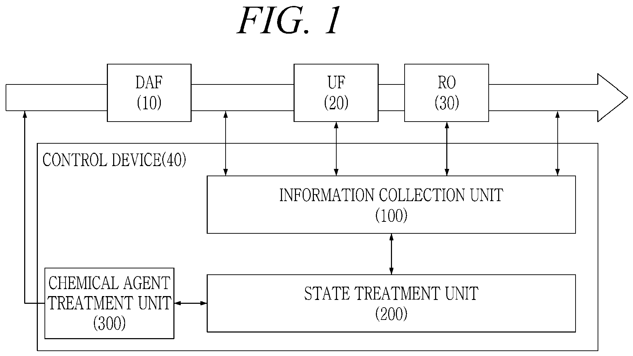

First, an apparatus for controlling a reverse osmosis membrane seawater desalination plant according to an embodiment of the present disclosure will be described with reference to FIG. 1. FIG. 1 is a schematic view for describing a configuration of an apparatus for controlling a reverse osmosis membrane seawater desalination plant according to an embodiment of the present disclosure. Referring to FIG. 1, the reverse osmosis membrane seawater desalination plant according to an embodiment of the present disclosure includes a dissolved air flotation (DAF) device 10, an ultrafiltration (UF) device 20, a reverse osmosis (RO) device 30, and a control device 40.

The dissolved air flotation device 10 receives seawater and provides DAF treated water (hereinafter, referred to as 'treated water') obtained by treating the seawater according to the dissolved air flotation (DAF).

The ultrafiltration device 20 includes one or more of ultrafiltration units, each having an ultrafiltration membrane. The ultrafiltration device 20 receives the treated water after the dissolved air flotation device 10 and performs an ultrafiltration (UF) process of filtering impurities remaining in the treated water using the ultrafiltration membranes of the one or more of ultrafiltration units. The ultrafiltration device 20 may filter the impurities remaining in the treated water by passing the treated water through the ultrafiltration membranes of the one or more of ultrafiltration units.

The reverse osmosis device 30 includes one or more of trains, each having a reverse osmosis membrane. The reverse osmosis device 30 receives the treated water processed and produced by the ultrafiltration device 20 and performs a reverse osmosis (RO) process of filtering the impurities remaining in the treated water using reverse osmosis membranes of the one or more of trains. The reverse osmosis device 30 may filter the impurities remaining in the treated water according to the reverse osmosis principle by passing the treated water through the reverse osmosis membranes of the plurality of trains.

According to an embodiment, the order of placement of the ultrafiltration device 20 and the reverse osmosis device 30 may be replaced. In other words, the reverse osmosis device 30 may receive the treated water after the dissolved air flotation device 10 and performs a reverse osmosis (RO) process. After that, the ultrafiltration device 20 may receive the treated water processed and produced by the reverse osmosis device 30 and performs an ultrafiltration (UF) process.

According to yet another embodiment, the ultrafiltration device 20 and the reverse osmosis device 30 may perform the ultrafiltration (UF) process and reverse osmosis (RO) process in parallel by each of them receiving a of the treated water directly from the dissolved air flotation device 10.

The control device 40 according to an embodiment of the present disclosure controls the injection amount of chemical agent to use during a pretreatment of the seawater desalination plant. More specifically, during the pretreatment of the seawater desalination plant, a chemical agent such as a hydrogen ion concentration (pH) modulator (e.g., H2SO4) and a coagulant (e.g., FeCl3) may be used. Accordingly, it is necessary to derive the optimal injection amount of chemical agent in the DAF treatment. However, since the injection amount of chemical agent also affects differential pressures (DP) of the ultrafiltration device 20 and the reverse osmosis device 30, which perform the UF process and the RO process that are the latter processes, which are to be performed later in time, the control device 40 according to an embodiment of the present disclosure performs a control of adjusting the injection amount of chemical agent so that, while being optimal for the DAF treatment, the differential pressures (DP) of the ultrafiltration device 20 and the reverse osmosis device 30 may be maintained to be less than certain reference values. In an embodiment of the present disclosure, the control of adjusting the injection amount of chemical agent means increasing or decreasing the injection amount based on a basic injection amount of the chemical agent. The control device 40 may include an information collection unit 100, a state treatment unit 200, and a chemical agent treatment unit 300.

The information collection unit 100 may collect water quality information on the treated water, treated according to the dissolved air flotation (DAF), and/or differential pressure information of the UF process and the RO process. The differential pressure information of the UF process and the RO process may represent changes in differential pressures (DP) according to the ultrafiltration (UF) process and the reverse osmosis (RO) process. Here, the water quality information may include a turbidity of the treated water and a residual iron (RI) of the treated water. The differential pressure information may include an ultrafiltration (UF) differential pressure increase rate and a reverse osmosis (RO) differential pressure increase rate. The ultrafiltration (UF) differential pressure increase rate means the differential pressure increase rate of the ultrafiltration device 20, and the reverse osmosis (RO) differential pressure increase rate means the differential pressure increase rate of the reverse osmosis device 30, which will be described in more detail below.

In addition, the state treatment unit 200 receives the water quality information, that is, the turbidity (hereinafter, the "Turb") of the treated water and the residual iron (the "RI") of the treated water, and the differential pressure information, that is, the ultrafiltration (the "UF") differential pressure increase rate and the reverse osmosis (the "RO") differential pressure increase rate from the information collection unit 100. According to an embodiment, the state treatment unit 20 may compare each of the water quality information and the differential pressure information with certain reference values to adjust the injection amount of chemical agent so that the differential pressures (the "DP") of the ultrafiltration device 20 and the reverse osmosis device 30 may be maintained to be less than the reference values while being optimal for the DAF treatment. For example, when the differential pressure (DP) of the ultrafiltration device 20 and/or the differential pressure (DP) of the reverse osmosis device 30 are greater than or equal to a certain reference value for the DP of the ultrafiltration device 20 and/or a certain reference value for the DP of the reverse osmosis device 30, the state treatment unit 200 may define the differential pressures as abnormal states (e.g., FBABNORMAL _1, FBABNORMAL 2, and FBABNORMAL_3 to be described below), and adjust the injection amount of chemical agent so that the turbidity of the treated water (Turb) and the residual iron (RI) of the treated water are maintained to be smaller than or equal to certain reference values for the Turb and the RI, and the differential pressures (DP) of the ultrafiltration device 20 and the reverse osmosis device 30 are stabilized to be less than their respective reference values. According to an embodiment, when the differential pressures (DP) of the ultrafiltration device 20 and the reverse osmosis device 30 are stabilized under their respective reference values, the state treatment unit 200 may adjust the injection amount of chemical agent to gradually converge or change to the basic injection amount while continuously confirming that abnormal states do not occur.

The chemical agent treatment unit 300 may inject a chemical agent into seawater before the DAF treatment. According to an embodiment, the chemical agent treatment unit 300 may inject the injection amount of chemical agent increased or decreased from the basic injection amount according to the control of the state treatment unit 200, or inject the basic injection amount.

Then, exemplary methods of calculating the ultrafiltration (UF) differential pressure increase rate and the reverse osmosis (RO) differential pressure increase rate, and comparing the ultrafiltration (UF) differential pressure increase rate and the reverse osmosis (RO) differential pressure increase rate with their respective reference values to determine whether an abnormal state occurs will be described in more detail.

According to an embodiment, the ultrafiltration (UF) process may proceed in three modes. This includes a filtration mode in which a filtration is performed, a backwash (the "BW") mode in which the ultrafiltration membrane is washed, and a chemical enhanced backwash (the "CEB") mode in which the ultrafiltration membrane is washed by using a detergent. According to an embodiment, after repeating the filtration mode (e.g., 30 minutes) and the backwash mode (e.g., 3 minutes) a predetermined number of times (e.g., 30 times), the chemical enhanced backwash mode (e.g., 70 minutes) may be performed. Here, according to an embodiment, a period in which the ultrafiltration differential pressure increase rate is calculated may be after a predetermined time (e.g., 1 minute) has elapsed after the filtration mode is started and until a predetermined time (e.g., 1 minute) before another mode, that is, the backwash mode (BW Mode) or the chemical enhanced backwash mode (CEB Mode) is started. The information collection unit 100 may calculate the ultrafiltration differential pressure increase rate of the one or more of ultrafiltration units using the differential pressure values collected from the plurality of ultrafiltration units during the period in which the ultrafiltration differential pressure increase rate is calculated.

The ultrafiltration differential pressure increase rate of any one of the one or more of ultrafiltration units may be calculated as follows. The information collection unit 100 may calculate a slope of a linear trend line of the differential pressure value (e.g., a from y = ax + b) collected from the ultrafiltration unit during the period in which the ultrafiltration differential pressure increase rate is calculated and determine such slope as the ultrafiltration differential pressure increase rate. The ultrafiltration differential pressure increase rate may be provided to the state treatment unit 200. The state treatment unit 200 may determine that the ultrafiltration differential pressure increase rate is greater than or equal to a preset reference value when the number of ultrafiltration units in which the ultrafiltration differential pressure increase rate (e.g, slope of the linear trend line) calculated by the information collection unit 100 is greater than or equal to a predetermined set value (e.g., 0.15) is greater than or equal to a predetermined set value (e.g., 10 units).

According to an embodiment, the reverse osmosis (RO) process may proceed in two modes. This includes a filtration mode in which the reverse osmosis filtration is performed and a chemical in place (the "CIP") mode in which washing is performed. The reverse osmosis (RO) process may repeat a process of performing the filtration mode for a predetermined time (e.g., 3 months) and then performing the CIP mode for a predetermined time (e.g., 2 days). A period in which the reverse osmosis differential pressure increase rate is calculated may be preset within a period in which the reverse osmosis device 30 performs the filtration mode. The information collection unit 100 may calculate the reverse osmosis differential pressure increase rate of the one or more of trains using the differential pressure values collected from the one or more of trains during the period in which the reverse osmosis differential pressure increase rate is calculated for all trains of the reverse osmosis device 30.

The reverse osmosis differential pressure increase rate of any one of the plurality of trains may be calculated as follows. A preset reverse osmosis differential pressure increase rate calculation period (e.g., 1000 minutes) may be divided into a unit time (e.g., 50 minutes), and the slope of the linear trend line of the differential pressure value (e.g., a from y = ax + b) collected from the corresponding train for each divided unit time is calculated as the reverse osmosis differential pressure increase rate of the corresponding train. The reverse osmosis differential pressure increase rate may be provided to the state treatment unit 200. The state treatment unit 200 may determine that the reverse osmosis differential pressure increase rate exceeds the preset reference value when the number of trains in which the reverse osmosis differential pressure increase rate (e.g., slope of the linear trend line of the differential pressure value) exceeds the predetermined set value (e.g., 0.05) exceeds the predetermined set value (e.g., 4 of 8 trains).

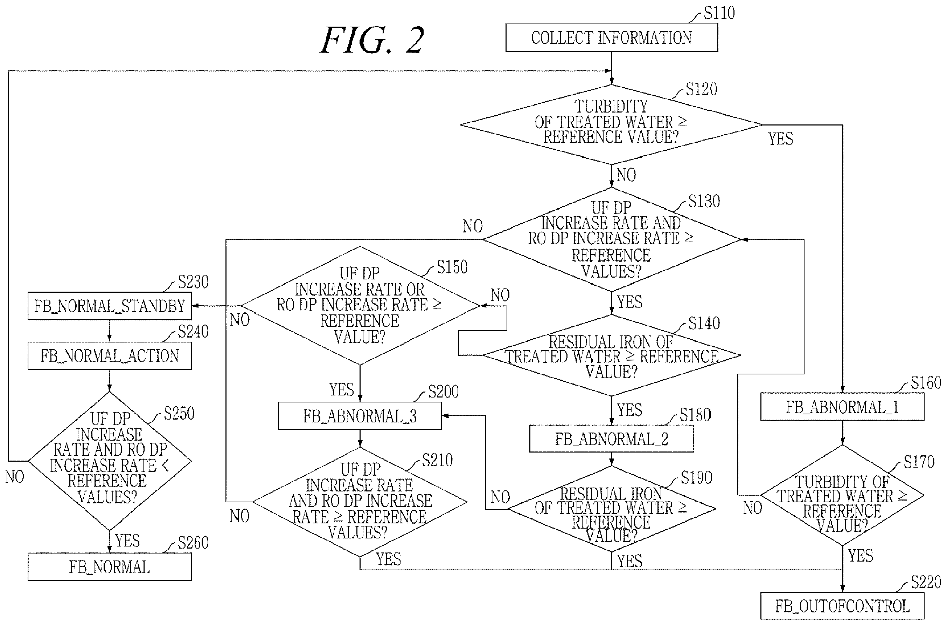

Next, a method of controlling the reverse osmosis membrane seawater desalination plant according to an embodiment of the present disclosure will be described in more detail. FIG. 2 is a flowchart for describing a method of controlling the reverse osmosis membrane seawater desalination plant according to an embodiment of the present disclosure.

Referring to FIG. 2, in operation S110, the information collection unit 100 continuously collects the water quality information on the treated water treated according to the dissolved air flotation (DAF), the differential pressure information representing the change in differential pressure (DP) according to the ultrafiltration (UF) process and the differential pressure information representing the change in differential pressure (DP) according to the reverse osmosis (RO) process and provides the collected information to the state treatment unit 200. Here, the water quality information may include the turbidity of the treated water and the residual iron (RI) of the treated water. The differential pressure information may include the ultrafiltration (UF) differential pressure increase rate and the reverse osmosis (RO) differential pressure increase rate.

In operation S120, the state treatment unit 200 determines whether the turbidity of the treated water is greater than or equal to a preset reference value. When the turbidity of the treated water is determined to be less than the preset reference value in operation S120, the state treatment unit 200 proceeds to operation S130. On the other hand, when the turbidity of the treated water is determined to be greater than or equal to the preset reference value as the determination result in operation S120, the state treatment unit 200 proceeds to operation S160.

In operation S130, the state treatment unit 200 determines whether the ultrafiltration (UF) differential pressure increase rate and the reverse osmosis (RO) differential pressure increase rate are greater than or equal to respective preset reference values. As the determination result in operation S130, the state treatment unit 200 may proceed to operation S140 when the ultrafiltration (UF) differential pressure increase rate and the reverse osmosis (RO) differential pressure increase rate are greater than or equal to their respective preset reference values. On the other hand, as the determination result in operation S130, the state treatment unit 200 may proceed to operation S230 when the ultrafiltration (UF) differential pressure increase rate or the reverse osmosis (RO) differential pressure increase rate is less than the preset reference value.

In operation S140, the state treatment unit 200 determines whether the residual iron (RI) of the treated water is greater than or equal to the preset reference value. As the determination result in operation S140, when the residual iron (RI) of the treated water is greater than or equal to the preset reference value, the state treatment unit 200 proceeds to operation S180. On the other hand, as the determination result in operation S140, when the residual iron (RI) of the treated water is less than the preset reference value, the state treatment unit 200 proceeds to operation S150.

In operation S150, the state treatment unit 200 determines whether the ultrafiltration (UF) differential pressure increase rate or the reverse osmosis (RO) differential pressure increase rate is greater than or equal to their respective preset reference values. As the determination result in operation S150, the state treatment unit 200 proceeds to operation S200 when the ultrafiltration (UF) differential pressure increase rate or the reverse osmosis (RO) differential pressure increase rate is greater than or equal to their respective preset reference values. On the other hand, as the determination result in operation S130, the state treatment unit 200 proceeds to operation S230 when the ultrafiltration (UF) differential pressure increase rate and the reverse osmosis (RO) differential pressure increase rate are less than their preset reference values.

As described above, according to an embodiment, when the turbidity of the treated water is determined to be greater than or equal to a preset reference value (S130), a process of a first abnormal state (FB _ABNORMAL_1) in operation S160 is performed. In other words, in operation S160, the state treatment unit 200 adjusts the injection amount of chemical agent so that the turbidity of the treated water becomes lower than a preset reference value. For example, the state treatment unit 200 increases or decreases the injection amount of F Bias (e.g., the injection amount of FeCl3) and the injection amount of S Bias (e.g., the injection amount of H2SO4).

Next, in operation S170, the state treatment unit 200 determines whether the turbidity of the treated water is greater than or equal to the preset reference value. As the confirmation result in operation S170, when the turbidity of the treated water is still greater than or equal to the preset reference value, the state treatment unit 200 proceeds to operation S220. On the other hand, as the confirmation result in operation S170, when the turbidity of the treated water is less than the preset reference value, the state treatment unit 200 proceeds to operation S130.

Meanwhile, as described above, when it is determined that the turbidity of the treated water is less than the preset reference value in operation S120, the ultrafiltration (UF) differential pressure increase rate and the reverse osmosis (RO) differential pressure increase rate are greater than or equal to their respective preset reference values in operation S130, and the residual iron (RI) of the treated water is greater than or equal to its preset reference value in operation S140, a process of a second abnormal state (FB_ABNORMAL_2) in operation S 180 is performed. In operation S180, the state treatment unit 200 adjusts the injection amount of chemical agent so that the residual iron (RI) of the treated water becomes less than a preset reference value. For example, the state treatment unit 200 increases or decreases the injection amount of F Bias (e.g., the injection amount of FeCl3) and the injection amount of S Bias (e.g., the injection amount of H2SO4).

Next, in operation S190, the state treatment unit 200 determines again whether the residual iron (RI) of the treated water is greater than or equal to the preset reference value. In operation S190, when the residual iron (RI) of the treated water is determined to be still greater than or equal to the preset reference value, the state treatment unit 200 proceeds to operation S220. On the other hand, in operation S190, when the residual iron (RI) of the treated water is reduced and determined to be to less than the preset reference value, the state treatment unit 200 proceeds to operation S200.

Meanwhile, as described above, when it is determined that the turbidity of the treated water is less than the preset reference value in operation S120, the ultrafiltration (UF) differential pressure increase rate and the reverse osmosis (RO) differential pressure increase rate are greater than or equal to the preset reference value in operation S130, the residual iron (RI) of the treated water is less than the preset reference value in operation S140, and the ultrafiltration (UF) differential pressure increase rate or the reverse osmosis (RO) differential pressure increase rate exceeds the preset reference value in operation S150, a process of a third abnormal state in operation S200 (FB_ABNORMAL_3) is performed. In operation S200, the state treatment unit 200 adjusts the injection amount of chemical agent so that the ultrafiltration (UF) differential pressure increase rate or the reverse osmosis (RO) differential pressure increase rate becomes lower than or equal to their respective preset reference value. For example, the state treatment unit 200 increases or decreases the injection amount of F Bias (e.g., the injection amount of FeCl3) and the injection amount of S Bias (e.g., the injection amount of H2SO4).

Subsequently, in operation S210, the state treatment unit 200 determines whether the ultrafiltration (UF) differential pressure increase rate and the reverse osmosis (RO) differential pressure increase rate are greater than or equal to the preset reference values. In operation S210, the state treatment unit 200 proceeds to operation S220 when the ultrafiltration (UF) differential pressure increase rate and the reverse osmosis (RO) differential pressure increase rate exceed the preset reference values. On the other hand, the state treatment unit 200 proceeds to operation S230 when any one of the ultrafiltration (UF) differential pressure increase rate and the reverse osmosis (RO) differential pressure increase rate is less than the preset reference value.

Operation S220 is a case when not having escaped from the abnormal state even after the treatments according to the first abnormal state S160, the second abnormal state S180, and the third abnormal state S200 (FB_ABNORMAL_1, FB_ABNORMAL_2, and FB_ABNORMAL_3, respectively) are performed, and the state treatment unit 200 recognizes this state as an out-of-control state (FB _OUTOFCONTROL). In operation S220, the state treatment unit 200 may generate an alarm, and enters a manual control mode, which is a mode in which the user directly controls the plant.

On the other hand, operation S230 is in a standby state (FB NORMAL-STANDBY) of waiting for whether to enter a normal state after the treatments according to the first abnormal state S160, the second abnormal state S180, and the third abnormal state S200 (FB ABNORMAL_1, FB_ABNORMAL_2, and FB_ABNORMAL_3, respectively) are performed. In the standby state (FB_NORMAL_STANDBY), the state treatment unit 200 may determine whether it is in the normal state at least for 1 hour at a predetermined time interval (e.g., 5 minutes).

Then, in operation S240, the state treatment unit 200 performs a recovery state (FB NORMAL _ACTION) process to adjust the injection amount of chemical agent to gradually converge or change to the basic injection amount. For example, the state treatment unit 200 increases or decreases the injection amount so that F Bias (additional injection amount of FeCl3) and S Bias (additional injection amount of H2SO4) become the basic injection amounts.

Subsequently, in operation S250, the state treatment unit 200 determines whether the ultrafiltration (UF) differential pressure increase rate and the reverse osmosis (RO) differential pressure increase rate are lower than or equal to the reference values. According to the determination in operation S250, the state treatment unit 200 proceeds to operation S260 when the ultrafiltration (UF) differential pressure increase rate and the reverse osmosis (RO) differential pressure increase rate are lower than or equal to their respective preset reference values. On the other hand, according to the determination in operation S250, the state treatment unit 200 returns to operation S120 when any one of the ultrafiltration (UF) differential pressure increase rate and the reverse osmosis (RO) differential pressure increase rate exceeds their respective preset reference values. Operation S260 is in a fully recovered normal state (FB NORMAL), and the state treatment unit 200 maintains a DCO auto control mode.

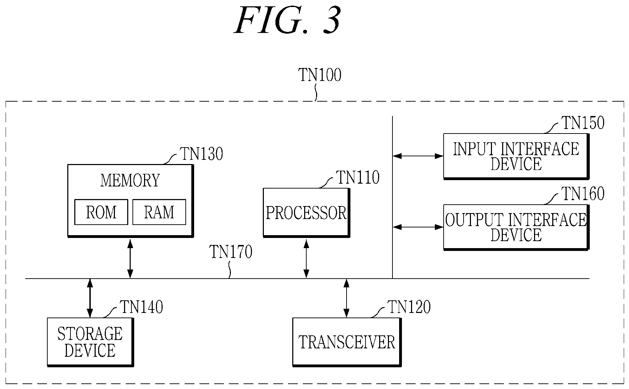

FIG. 3 is a view showing a computing apparatus according to an embodiment of the present disclosure. A computing device TN100 may be a device described in this specification (e.g., a device configured to control the reverse osmosis membrane seawater desalination plant).

In the embodiment of FIG. 3, the computing device TN100 may include at least one processor TN110, a transceiver TN120, and a memory TN130. In addition, the computing device TN100 may further include a storage device TN140, an input interface device TN150, an output interface device TN160, and the like. Components included in the computing device TN100 may be connected by a bus TN170 to communicate with each other. The components included in the computing device TN100, such as at least one processor TN110, a transceiver TN120, a memory TN130, a storage device TN140, an input interface device TN150, an output interface device TN160, and the like may be in in a form of circuitries which are configured to execute respective functions.

The processor TN110 may execute a program command stored in at least one of the memory TN130 and the storage device TN140. The processor TN110 may refer to a central processing unit (CPU), a graphics processing unit (GPU), or a dedicated processor on which the methods according to the embodiment of the present disclosure are performed. The processor TN110 may be configured to implement procedures, functions, methods, and the like described in connection with the embodiment of the present disclosure. The processor TN110 may control each component of the computing device TN100.

Each of the memory TN130 and the storage device TN140 may store various information related to an operation of the processor TN110. Each of the memory TN130 and the storage device TN140 may be configured as at least one of a volatile storage medium and a nonvolatile storage medium. For example, the memory TN130 may be configured as at least one of a read-only memory (ROM) and a random access memory (RAM).

The transceiver TN120 may transmit or receive a wired signal or a wireless signal. The transceiver TN120 may be connected to a network to perform communication.

Meanwhile, various methods according to the embodiment of the present disclosure described above may be implemented in the form of a readable program through various computer means and recorded in a computer readable recording medium. Here, the recording medium may include a program command, a data file, a data structure, and the like alone or in combination. The program commands recorded on the recording medium may be those that is specially designed and configured for the present disclosure, or known and available to those skilled in the art of computer software. For example, the recording medium includes magnetic media such as hard disks, floppy disks, and magnetic tapes, optical media such as CD-ROMs and DVDs, magneto-optical media such as floptical disks, and hardware devices specially configured to store and execute the program command such as ROM, RAM, and flash memory. For example, the program command may include not only machine language wires such as those generated by a compiler, but also high-level language wires that may be executed by a computer using an interpreter or the like. These hardware devices may be configured to be operated as one or more software modules in order to perform the operations of the present disclosure, and vice versa.

While one embodiment of the present disclosure has been described above, those skilled in the art may variously modify and change the present disclosure by attaching, changing, deleting, or adding the components without departing from the spirit of the present disclosure described in the claims, and this will also be included in the scope of the present disclosure.

## Claims

1. An apparatus for controlling a reverse osmosis membrane seawater desalination plant, the apparatus comprising:
a dissolved air flotation device configured to receive seawater and to provide treated water obtained by treating the seawater according to dissolved air flotation (DAF);
an ultrafiltration device including one or more of ultrafiltration units, each ultrafiltration unit having an ultrafiltration membrane, and configured to perform an ultrafiltration (UF) process of filtering impurities remaining in the treated water using the ultrafiltration membranes of the one or more of ultrafiltration units;
a reverse osmosis device including one or more of trains, each train having a reverse osmosis membrane, and configured to perform a reverse osmosis (RO) process of filtering the impurities remaining in the treated water using reverse osmosis membranes of the plurality of trains;
an information collection unit configured to collect a turbidity (Turb) of the treated water, a residual iron (RI) of the treated water, an ultrafiltration differential pressure increase rate representing an increase rate of a differential pressure (DP) according to the ultrafiltration process, and a reverse osmosis differential pressure increase rate representing an increase rate of the differential pressure according to the reverse osmosis process; and
a state treatment unit configured to adjust an injection amount of chemical agent that is injected into the seawater so as to maintain a state in which the ultrafiltration differential pressure increase rate and the reverse osmosis differential pressure increase rate are less than a preset UF reference value and a preset RO reference value, respectively, while maintaining a state in which the turbidity and the residual iron are less than a preset Turb reference value and a preset RI reference value.

2. The apparatus of claim 1,
wherein the state treatment unit determines whether the turbidity of the treated water is greater than or equal to the preset Turb reference value, and
adjusts the injection amount of chemical agent so that the turbidity of the treated water become less than the preset Turb reference value when the turbidity of the treated water is determined to be greater than or equal to the preset Turb reference value.

3. The apparatus of claims 1 or 2,
wherein the state treatment unit determines whether the ultrafiltration differential pressure increase rate and the reverse osmosis differential pressure increase rate are greater than or equal to the preset UF reference value and a preset RO reference value, respectively, when the turbidity of the treated water is determined to be less than the preset Turb reference value,
determines whether the residual iron of the treated water is greater than or equal to the preset RI reference value when the ultrafiltration differential pressure increase rate and the reverse osmosis differential pressure increase rate are determined to be greater than or equal to the preset UF reference value and a preset RO reference value, respectively, and
changes the injection amount of chemical agent so that the residual iron of the treated water becomes less than the preset RI reference value when the residual iron of the treated water is determined to be greater than or equal to the preset RI reference value.

4. The apparatus of claims 1 to 3,
wherein the state treatment unit determines whether the ultrafiltration differential pressure increase rate or the reverse osmosis differential pressure increase rate is greater than or equal to the preset UF reference value or a preset RO reference value, respectively, when the residual iron of the treated water is determined to be less than the preset RI reference value, and
changes the injection amount of chemical agent so that the ultrafiltration differential pressure increase rate and the reverse osmosis differential pressure increase rate become less than the preset UF reference value and a preset RO reference value, respectively, when the ultrafiltration differential pressure increase rate or the reverse osmosis differential pressure increase rate is determined to be greater than or equal to the preset UF reference value or a preset RO reference value, respectively.

5. The apparatus of claim 4,
wherein when the ultrafiltration differential pressure increase rate and the reverse osmosis differential pressure increase rate are determined to be less than the preset UF reference value and a preset RO reference value, respectively,
the state treatment unit adjusts the injection amount of chemical agent to gradually converge to a basic injection amount after waiting for a predetermined period.

6. The apparatus according to any one of the preceding claims,
wherein the chemical agent includes at least one of a hydrogen ion concentration modulator and a coagulant.

7. The apparatus of claim 1,
wherein the information collection unit collects a differential pressure value from the ultrafiltration unit during an ultrafiltration differential pressure increase rate calculation period that is from a predetermined time after a filtration mode in which the ultrafiltration unit performs filtering is started and until a predetermined time before any one of a backwash mode or a chemical enhanced backwash mode in which the ultrafiltration unit performs washing is started, and calculates a slope of a linear trend line of the collected differential pressure values as the ultrafiltration differential pressure increase rate of the ultrafiltration unit.

8. The apparatus of claim 7,
wherein the state treatment unit determines that the ultrafiltration differential pressure increase rate is greater than or equal to the preset UF reference value when the number of ultrafiltration units in which the ultrafiltration differential pressure increase rate is greater than or equal to a predetermined set value is greater than or equal to a predetermined number of UF units.

9. The apparatus of claim 1,
wherein the information collection unit collects a differential pressure value from the train during a preset reverse osmosis differential pressure increase rate calculation period,
divides the preset reverse osmosis differential pressure increase rate calculation period into unit times, and calculates a slope of a linear trend line of the collected differential pressure values for each divided unit time as the reverse osmosis differential pressure increase rate.

10. The apparatus of claim 9,
wherein the state treatment unit determines that the reverse osmosis differential pressure increase rate is greater than or equal to the preset RO reference value when the number of trains in which the reverse osmosis differential pressure increase rate is greater than or equal to a predetermined set value is greater than or equal to a predetermined number of RO trains.

11. A method of controlling a reverse osmosis membrane seawater desalination plant, the method comprising:
collecting, by an information collection unit, a turbidity (Turb) and a residual iron (RI) of treated water obtained by treating seawater according to dissolved air flotation (DAF), an ultrafiltration differential pressure increase rate representing an increase rate of a differential pressure (DP) according to the ultrafiltration (UF) process of filtering impurities remaining in the treated water, and a reverse osmosis differential pressure increase rate representing an increase rate of the differential pressure according to the reverse osmosis process of filtering the impurities remaining in the treated water; and
comparing, by a state treatment unit, the turbidity of the treated water, the residual iron of the treated water, the ultrafiltration differential pressure increase rate, and the reverse osmosis differential pressure increase rate with a preset Turb reference value, a preset RI reference value, a preset UF reference value and a preset RO reference value, and adjusting the injection amount of chemical agent to the seawater so as to maintain a state in which the ultrafiltration differential pressure increase rate and the reverse osmosis differential pressure increase rate become less than the preset UF reference value and the preset RO reference value while maintaining a state in which the turbidity and the residual iron are less than the preset Turb reference value and the preset RI reference value.

12. The method of claim 11,
wherein the adjusting of the injection amount of chemical agent includes:
determining, by the state treatment unit, whether the turbidity of the treated water is greater than or equal to the preset Turb reference value; and
adjusting, by the state treatment unit, the injection amount of chemical agent so that the turbidity of the treated water becomes less than the the preset Turb reference value when the turbidity of the treated water is determined to be greater than or equal to the preset Turb reference value.

13. The method of claim 12, further comprising: after the determining of whether the turbidity of the treated water is greater than or equal to the preset Turb reference value,
determining, by the state treatment unit, whether the ultrafiltration differential pressure increase rate and the reverse osmosis differential pressure increase rate are greater than or equal to the preset UF reference value and the preset RO reference value, respectively, when the turbidity of the treated water is determined to be less than the preset Turb reference value;
determining, by the state treatment unit, whether the residual iron of the treated water is greater than or equal to the preset RI reference value when the ultrafiltration differential pressure increase rate and the reverse osmosis differential pressure increase rate are determined to be greater than or equal to the preset UF reference value and the preset RO reference value; and
changing, by the state treatment unit, the injection amount of chemical agent so that the residual iron of the treated water becomes less than the preset RI reference value when the residual iron of the treated water is determined to be greater than or equal to the preset RI reference value.

14. The method of claim 13, further comprising: after the determining of whether the residual iron of the treated water is greater than or equal to the preset RI reference value,
determining, by the state treatment unit, whether the ultrafiltration differential pressure increase rate or the reverse osmosis differential pressure increase rate is greater than or equal to the preset UF reference value or the preset RO reference value, respectively, when the residual iron of the treated water is determined to be less than the preset RI reference value; and
changing, by the state treatment unit, the injection amount of chemical agent so that the ultrafiltration differential pressure increase rate and the reverse osmosis differential pressure increase rate become less than the preset UF reference value and the preset RO reference value, respectively, when the ultrafiltration differential pressure increase rate or the reverse osmosis differential pressure increase rate is determined to be greater than or equal to the preset UF reference value and the preset RO reference value, respectively.

15. The method of claim 14, further comprising: after the determining of whether the ultrafiltration differential pressure increase rate or the reverse osmosis differential pressure increase rate is greater than or equal to the preset UF reference value or the preset RO reference value, respectively,
when the ultrafiltration differential pressure increase rate and the reverse osmosis differential pressure increase rate are determined to be less than the preset UF reference value and the preset RO reference value, respectively,
waiting, by the state treatment unit, for a predetermined period; and
adjusting, by the state treatment unit, the injection amount of chemical agent to gradually converge to a basic injection amount.
